# EUROPÄISCHE PATENTSCHRIFT

(11) **EP 0 427 109 B1**
(45) Veröffentlichungstag und Bekanntmachung des Hinweises auf die Patenterteilung: **20.03.1996**
(21) Anmeldenummer: 90120924.7
(22) Anmeldetag: 31.10.1990
(51) Int. Cl.: H04B 10/00

(54) **Optisches Nachrichtennetz**
Optical communication network
Réseau de communication optique

(30) Priorität: 09.11.1989 DE 3937360
(43) Veröffentlichungstag der Anmeldung: 15.05.1991
(73) Patentinhaber: SIEMENS AKTIENGESELLSCHAFT, D-80333 München (DE)
(72) Erfinder: Pascher, Helmut, W-8000 München 70 (DE)

(56) Entgegenhaltungen:
- EP-A- 0 193 190
- US-A- 3 818 237
- PATENT ABSTRACTS OF JAPAN vol. 5, no. 167 (E-79)(839) 24. Oktober 1981 & JP-A-56 094 850 ( FUJITSU )
- NAVY TECHNICAL DISCLOSURE BULLETIN. Bd. 7, Nr. 4, Juni 1982, ARLINGTON US Seiten 47 - 52; S.J.COWEN: 'Improved Fiber Optic Transmission through redundancy'
- PATENT ABSTRACTS OF JAPAN vol. 6, no. 185 (E-132)(1063) 21. September 1982 & JP-A-57 097 741 ( FUJITSU )

## Beschreibung

Die Erfindung betrifft ein optisches Nachrichtennetz für Multiplexbetrieb, bei dem ausgehend von einer Verteilerstelle Jeweils ein Lichtwellenleiter bis zu einer Verzweigungsstelle geführt ist, wo mittels eines Richtkopplers eine Aufteilung der Signale in zwei oder mehrere Teilsignale erfolgt.

Ein optisches Nachrichtennetz dieser Art ist aus der DE-OS 35 07 064 bekannt. Die von einer Zentralstelle kommenden Signale werden in Zeitmultiplexverfahren mittels einer ersten optischen Wellenlänge bis zum Teilnehmerbereich übertragen, während für die von den Teilnehmer kommenden Signale eine zweite Wellenlänge vorgesehen ist. Die Verzweigung auf mehrere Teilnehmerstellen erfolgt mittels passiver optischer Koppler, beispielsweise Richtungskoppler. Für einen Übertragungsweg steht zwischen der Verteilstelle und der Verzweigungsstelle jeweils nur ein Lichtwellenleiter zur Verfügung. Da eine größere Zahl von Teilnehmern (bei der Kaskadenschaltung von Richtungskopplern, z.B. 16 bis 256) von der Integrität dieses einen Lichtwellenleiters abhängt, ist bei Ausfall dieses einen Lichtwellenleiters auch die entsprechende Zahl von Teilnehmerstellen nicht mehr an die Verteilerstelle angeschlossen. Eine weitere Schwierigkeit besteht darin, daß bei Arbeiten an der Strecke (z.B. Spleißarbeiten oder dergleichen) der eine Lichtwellenleiter zumindest zeitweise nicht für die Nachrichtenübertragung zur Verfügung steht und deshalb die Teilnehmeranschlüsse unterbrochen sind.

In "Patent Abstracts of Japan", vol. 5 no 167 (E-79) (839) vom 24. Oktober 1981 (JP-A-56 094 850) ist das Grundprinzip einer Verbesserung der Übertragungssicherheit beschrieben. Dieses besteht darin, alle Teile des Netzes doppelt, d.h. zwei spiegelbildliche Netze vorzusehen. Da diese Lösung noch nicht ausreichen würde, um bei einem Ausfall sowohl eines Bauteils des einen Netzes als auch eines Bauteils des anderen Netzes noch eine Übertragung zu sichern, werden bei der bekannten Systemlösung zusätzlich zwischen beiden Netzen Koppler eingefügt, die ein Zusammenführen und erneutes Aufteilen der parallelen Signalwege beider Netze bewirken. Der Aufwand für eine derartige Netzstruktur ist erheblich, weil zwei vollständige Netze und zusätzliche Koppler benötigt werden.

Der vorliegenden Erfindung liegt die Aufgabe zugrunde, in einfacher Weise eine zusätzliche Übertragungsstrecke zu den Teilnehmern bereit zu stellen und gleichzeitig ohne größeren Aufwand eine störungssichere Versorgung der Teilnehmer zu gewährleisten. Gemäß der Erfindung wird diese Aufgabe bei einem optischen Nachrichtennetz der eingangs genannten Art dadurch gelöst, daß zwischen der Verteilungsstelle und der Verzweigungsstelle zusätzlich ein zweiter Lichtwellenleiter verlegt ist und daß dieser zweite Lichtwellenleiter an den zweiten Eingang des Richtungskoppler angeschlossen ist.

Da für den zweiten Lichtwellenleiter der (normalerweise mit einem refexionsfreien Abschluß versehene) zweite Eingang des Richtungskopplers benutzt werden kann, ist hierfür kein ins Gewicht fallender Aufwand im Verzweigungsbereich erforderlich. Die Bereitstellung eines zusätzlichen Lichtwellenleiters für einen derartigen Übertragungsweg ist bei der heute möglichen großen Faserzahl innerhalb von Lichtwellenleiterkabeln ebenfalls als ein nicht mehr ins Gewicht fallender zusätzlicher Aufwand anzusehen. Dafür ist im Störungsfall oder bei Spleißarbeiten ein zweiter Übertragungsweg vorhanden, auf den die Sendeeinrichtung im Bereich der Verteilungsstelle ohne weiteres umgeschalten werden kann.

Im Rahmen der Erfindung ist (zum Beispiel über einen Wellenlängen-Multiplexbetrieb) auch eine doppelte Verbindung zwischen den Teilnehmern und der Verteilstelle möglich (Zweiwegebetrieb).

Weiterbildungen der Erfindung sind in Unteransprüchen wiedergegeben.

Die Erfindung und ihre Weiterbildungen werden nachfolgend anhand von Zeichnungen näher erläutert.

Es zeigen:
- Fig. 1: den Aufbau eines Nachrichtennetzes mit einer Verzweigungsstelle entsprechend dem Stand der Technik,
- Fig. 2: ein Nachrichtennetz gemäß der Erfindung,
- Fig. 3: in schematischer Darstellung ein Nachrichtennetz gemäß Fig. 2 mit einer größeren Anzahl von Teilnehmeranschlußleitungen und
- Fig. 4: ein Nachrichtennetz gemäß der Erfindung mit Zweiwegeführung.

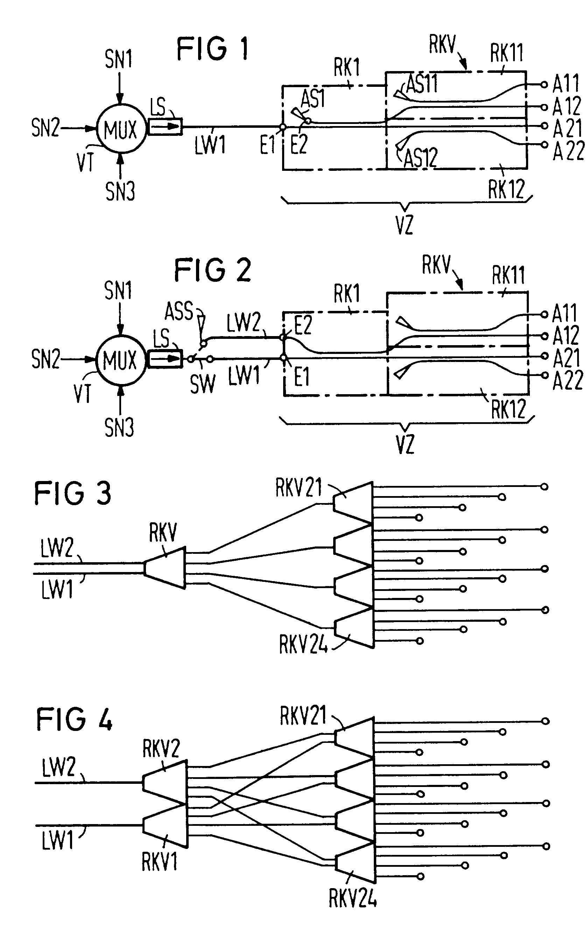

In Fig. 1 ist eine Verteilerstelle mit VT bezeichnet. Dieser Verteilerstelle werden verschiedene Signale SM1-SM3 zugeführt (beispielsweise Fernsehsignale, Fernsprechsignale, Fernschreibsignale usw.), die mittels einer Multiplexeinrichtung in ein Multiplexsignal umgesetzt werden. Dieses Multiplexsignal, vorzugsweise ein TDMA-Signal, wird mittels eines Lasersenders LS in ein optisches Netz eingespeist, von dem im vorliegenden Beispiel nur ein Übertragungsweg dargestellt ist. In Wirklichkeit können mehrere Übertragungswege und/oder mehrere Lasersender vorgesehen sein. Für die Übertragung zu einer bestimmten Teilnehmergruppe ist ein Lichtwellenleiter LW1 vorgesehen, der an seinem fernen Ende (übliche Entfernungen zu VT zwischen 100 und 3000 Meter in Mittel ca. 1500 Meter) an eine Verzweigungseinrichtung VZ angeschlossen ist. Im vorliegenden Beispiel ist angenommen, daß eine Verzweigung auf vier Ausgänge A11-A22 durchgeführt werden soll. Hierzu ist der Lichtwellenleiter LW1 an den Eingang E1 eines Richtungskopplers RK1 angeschlossen, der bevorzugt als 3 dB Richtkoppler ausgebildet ist. Das vom Lichtwellenleiter LW1 kommende Nachrichtensignal ist somit an den Ausgängen des Richtungskopplers RK1 in zwei gleich große Teilsignale aufgeteilt, die ihrerseits zwei weiteren Richtungskopplern RK11 und RK12 zugeführt werden. Die vier Ausgänge A11-A22 dieser Richtkoppler RK11 und RK12 liefern die vier (vorzugsweise) gleich großen Ausgangssignale der Verzweigungsschaltung VZ. Die jeweils offenen Ausgänge der Richtungskoppler RK1, RK11 und RK12 sind mit reflexionsfreien Abschlüssen AS1, AS11 und AS12 versehen.

Bei einem Ausfall des Lichtwellenleiters LW1 (z.B. durch eine Schädigung oder während Spleißarbeiten oder dergleichen) sind die gesamten Ausgänge A11-A22 im Bereich der Verzweigungsstelle VZ nicht mehr mit der zentralen Verteilerstelle VT verbunden. Eine Abhilfe ist mit geringem Aufwand möglich, wenn die in Fig. 2 dargestellte Konfiguration benutzt wird. Hier ist zusätzlich zu den in Fig. 1 beschriebenen und dargestellten Elementen ein weiterer Lichtwellenleiter LW2 vorgesehen, der zusammen mit dem Lichtwellenleiter LW1 im gleichen Kabel verlegt oder auch über eine völlig getrennte Trasse geführt sein kann und der im Bereich der Verzweigungsstelle VZ an den zweiten Eingang E2 des Richtungskopplers RK1* angeschlossen ist (d.h. anstelle des reflexionsfreien Abschlusses AS1). Das andere Ende dieses Lichtwellenleiters LW2 ist offen bzw. kann gegebenenfalls durch einen reflexionsfreien Abschluß ASS abgeschlossen werden. Wenn die Länge des Lichtwellenleiters LW2 ausreichend groß ist, kann auf den Abschluß ASS verzichtet werden, weil dann die Streckendämpfung auf den Lichtwellenleiter LW2 so groß ist, daß selbst totalreflektierte Restanteile der Signale vom Lichtwellenleiter LW1 bei ihrem Wiedereintreffen an der Klemme E2 zu keinen Störungen mehr führen können. Der Aufbau der übrigen Richtungskoppler RK11 und RK12 entspricht dem vom Fig. 1.

Der Sender für die Multiplexsignale LS ist über einen Schalter SW an den Lichtwellenleiter LW1 angeschlossen und die Signalenergie wird somit zu gleichen Teilen auf die Anschlüsse A11-A22 aufgeteilt. Bei einer Störung oder Unterbrechung des Lichtwellenleiters LW1 schaltet der Schalter SW den Ausgang des Senders LS auf den Lichtwellenleiter LW2 um, so daß die Signalenergie wiederum zu gleichen Teilen an den Ausgängen A11-A22 zu Verfügung steht. Eine Störung oder Beeinträchtigung eines Lichtwellenleiters hat somit durch die einfache Umschaltmöglichkeit keinen störenden Einfluß mehr, wobei der zusätzliche Aufwand beim Richtungskoppler RK1 nicht ins Gewicht fällt, weil hier lediglich am Anschluß E2 statt des Abschlußwiderstandes AS1 der Lichtwellenleiter LW2 anzuschließen ist.

In Fig. 3 ist eine Anordnung entsprechend Fig. 2 gezeigt, bei der an die vier Ausgänge des 1:4-Kopplers RKV (dessen Aufbau im einzelnen in Fig. 2 gezeigt ist) jeweils vier weitere 1:4-Koppler RKV21-RKV24 angeschlossen sind, so daß insgesamt 16 Ausgänge zur Verfügung stehen. Über das eingangs erwähnte TDMA-Multiplexsystem können so ohne weiteres Anschlußzahlen (Teilnehmerzahlen) bis zu z.B. 256 in einer für die physikalische Netzgestaltung günstigen 16er-Gruppierungen realisiert werden.

Bisher wurde die Übertragung von Nachrichten lediglich in der Richtung von der zentralen Verteilerstelle VT in Richtung auf die Verzweigungsstelle VZ (d.h. in Richtung zu den Teilnehmern) beschrieben. Wie aus Fig. 4 hervorgeht, ist die gleiche Struktur auch dann einsetzbar, wenn eine Zweiwegeführung beabsichtigt ist. In diesem Fall ist ein Zweierpaar von Richtkopplern RKV1 und RKV2 vorzusehen (für jeden der Lichtwellenleiter LW1 und LW2 eines), deren teilnehmerseitige Anschlüsse kreuzweise mit den Eingängen von vier weiteren Richtkopplern RKV21 bis RKV24 zu verbinden sind. Anders ausgedrückt bedeutet dies, daß auch die Eingänge der Richtkoppler RKV21 bis RKV24 doppelt zu beschalten sind, d.h. ähnlich wie dies beim Richtkoppler RK1* in Fig. 2 gezeigt ist.

## Patentansprüche

1. Optisches Nachrichtennetz für Multiplexbetrieb, bei dem ausgehend von einer Verteilerstelle (VT) jeweils ein Lichtwellenleiter (LW1) bis zu einer Verzweigungsstelle (VZ) geführt ist, wo mittels eines Richtkopplers (RK1) eine Aufteilung der Signale in zwei oder mehrere Teilsignale erfolgt,
**dadurch gekennzeichnet,**
daß zwischen der Verteilerstelle (VT) und der Verzweigungsstelle (VZ) zusätzlich ein zweiter Lichtwellenleiter (LW2) verlegt ist und daß dieser zweite Lichtwellenleiter (LW2) an den zweiten Eingang (E2) des Richtungskoppler (RK1) angeschlossen ist.

2. Optisches Nachrichtennetz nach Anspruch 1,
**dadurch gekennzeichnet,**
daß der zweite Lichtwellenleiter (LW2) an seinem Ende bei der Verteilerstelle (VT) reflexionsfrei (ASS) abgeschlossen ist.

3. Optisches Nachrichtennetz nach einem der vorhergehenden Ansprüche,
**dadurch gekennzeichnet,**
daß eine Umschalteinrichtung (SW) im Bereich der Verteilerstelle (VT) vorgesehen ist, die bei Bedarf den Ausgang und/oder Eingang der Verteilerstelle auf den zweiten Lichtwellenleiter (LW2) umschaltet.

4. Optisches Nachrichtennetz nach einem der vorhergehenden Ansprüche,
**dadurch gekennzeichnet,**
daß mehrere Richtkoppler (RK1, RK11, RK12) in Kaskade geschaltet sind.

5. Optisches Nachrichtennetz nach einem der vorhergehenden Ansprüche,
**dadurch gekennzeichnet,**
daß für einen Zweiwegebetrieb auf der Seite der Verteilerstelle (VT) zwei Richtkoppler (RKV1, RKV2) vorgesehen sind, von denen jeder an je einem der Lichtwellenleiter (LW1, LW2) angeschlossen ist und deren Ausgänge kreuzweise mit nachfolgenden Richtkopplern verbunden sind (Fig. 4).

## Claims

1. Optical communication network for multiplex operation in which, proceeding from a distributor point (VT), in each case an optical waveguide (LW1) is led to a branching point (VZ) where a division of the signals into two or more partial signals is carried out by means of a directional coupler (RK1), characterized in that, between the distributor point (VT) and the branching point (VZ), a second optical waveguide (LW2) is additionally laid, and in that this second optical waveguide (LW2) is connected to the second input (E2) of the directional coupler (RK1) .

2. Optical communication network according to Claim 1, characterized in that the second optical waveguide (LW2) is terminated in a reflection-free manner (ASS) at its end at the distributor point (VT).

3. Optical communication network according to one of the preceding claims, characterized in that a switch-over device (SW) is provided in the area of the distributor point (VT) and, as required, switches over the output and/or input of the distributor point to the second optical waveguide (LW2).

4. Optical communication network according to one of the preceding claims, characterized in that a plurality of directional couplers (RK1, RK11, RK12) are wired in cascade.

5. Optical communication network according to one of the preceding claims, characterized in that, for two-path operation on the side of the distributor point (VT), two directional couplers (RKV1, RKV2) are provided, each of which is connected to one of the optical waveguides (LW1, LW2), and of which the outputs are connected in a crossed fashion to the following directional couplers (Fig. 4).

## Revendications

1. Réseau optique de communication en exploitation en multiplex, dans lequel un guide d'ondes lumineuses (LW1) est relié d'un poste (VT) répartiteur à un poste (VZ) de ramification, où une division des signaux en deux ou plusieurs signaux partiels s'effectue au moyen d'un coupleur (RK1) directif,
caractérisé en ce que
un second guide d'ondes lumineuses (LW2) supplémentaire est disposé entre le poste (VT) répartiteur et le poste (VZ) de ramification et ce second guide d'ondes lumineuses (LW2) est connecté à la seconde entrée (E2) du coupleur directif (RK1).

2. Réseau optique de communication suivant la revendication 1, caractérisé en ce que le second guide d'ondes lumineuses (LW2) se termine à son extrémité au poste (VT) répartiteur sans réflexion (ASS).

3. Réseau optique de communication suivant l'une des revendications précédentes, caractérisé en ce qu'un dispositif (SW) de commutation, qui commute au besoin la sortie et/ou l'entrée du poste répartiteur sur le second guide d'ondes lumineuses (LW2), est prévu dans la zone du poste répartiteur (VT).

4. Réseau optique de communication suivant l'une des revendications précédentes, caractérisé en ce que plusieurs coupleurs directifs (RK1,RK11,RK12) sont branchés en cascade.

5. Réseau optique de communication suivant l'une des revendications précédentes, caractérisé en ce que deux coupleurs directifs (RKV1, RKV2) , qui sont connectés chacun à l'un des guides d'ondes lumineuses (LW1,LW2) et dont les sorties sont reliées en croix (figure 4) à des coupleurs directifs en aval, sont prévus pour un fonctionnement à deux voies du côté du poste répartiteur (VT).
